# EUROPEAN PATENT APPLICATION

(11) **EP 4 553 964 A1**
(43) Date of publication of application: **14.05.2025**
(21) Application number: 24211273.8
(22) Date of filing: 06.11.2024
(51) Int. Cl.: H01M 50/105, H01M 50/186, H01M 50/342

(54) **RECHARGEABLE BATTERY**

(30) Priority: 07.11.2023 KR 20230152966
(71) Applicant: SAMSUNG SDI CO., LTD., Yongin-si, Gyeonggi-do 17084 (KR)
(72) Inventor: CHOI, Kyugil, Yongin-si, Gyeonggi-do 17084 (KR); JANG, Minyoung, Yongin-si, Gyeonggi-do 17084 (KR); CHO, Hyun, Yongin-si, Gyeonggi-do 17084 (KR)
(74) Representative: Marks & Clerk LLP

(57) **Abstract**

A rechargeable battery includes: an electrode assembly; a case comprising a first sheet disposed at an upper side of the electrode assembly in a thickness direction and a second sheet disposed at a lower side of the electrode assembly along the thickness direction, an accommodating portion at least partially surrounding the electrode assembly and formed by the first and second sheets, a sealing portion, formed by the first and second sheets connected to an edge of the accommodating portion and bent to face a side surface of the accommodating portion, the sealing portion comprising a vent layer provided in the sealing portion, and a cutout portion disposed at one end portion of the sealing portion, wherein the vent layer is disposed on a bonding surface between the first sheet and the second sheet and contacts a corner of the accommodating portion and the cutout portion.

## Description

### BACKGROUND OF THE INVENTION

### (a) Field of the Invention

The present disclosure relates to a rechargeable battery, and more particularly, to a case of a pouch-type battery, and to a method of manufacturing a rechargeable battery.

### (b) Description of the Related Art

A chargeable battery is used for various purposes such as a power source for a small electronic device such as a mobile phone or a laptop computer, a power source for driving a motor in a transportation vehicle such as an electric vehicle or a hybrid vehicle, and the like. In the former case, a pouch-type battery is mainly used to facilitate the miniaturization and slimming of the small electronic device.

An internal temperature and an internal pressure of the rechargeable battery may rapidly rise due to various causes such as fast charging, an internal short circuit, an external impact, exposure to a high-temperature environment, and the like.

### SUMMARY

The present disclosure provides a rechargeable battery capable of easily discharging an internal gas under a predetermined temperature and pressure condition by having a vent function optimized for a sealing structure of a pouch-type battery. The present disclosure also provides a method of manufacturing a rechargeable battery.

A rechargeable battery according to a first aspect includes:
an electrode assembly;
a case comprising:
   a first sheet disposed at an upper side of the electrode assembly along a thickness direction;
   a second sheet disposed at a lower side of the electrode assembly along the thickness direction;
   an accommodating portion at least partially surrounding the electrode assembly;
   a sealing portion connected to an edge of the accommodating portion,
   a vent layer that is provided at the sealing portion; and
   a cutout portion,
   wherein the sealing portion is bent to face a side surface of the accommodating portion,
   wherein the cutout portion is disposed at one end portion of the sealing portion, and
   wherein the vent layer is disposed on a bonding surface between the first sheet and the second sheet and contacts a corner of the accommodating portion and the cutout portion.

The accommodating portion may be formed by the first and second sheets.

The sealing portion may be formed by the first and second sheets.

The sealing portion may include a pair of first sealing portions, each respective one of the pair of first sealing portions being disposed on a respective side of the accommodating portion, and each of the pair of first sealing portions may include a first portion facing the side surface of the accommodating portion and a second portion extending outward from the first portion.

The cutout portion may be disposed at a corner of the second portion of a respective one of the pair of first sealing portions, and the vent layer may be provided on an entire bonding surface of the second portion of a respective one of the pair of first sealing portions.

The cutout portion may have any one of an arc shape or a straight-line shape parallel to a diagonal direction.

The cutout portion may be disposed continuously across a corner of the second portion and a portion of the first portion of a respective one of the pair of first sealing portions, and the vent layer may be disposed continuously across an entire bonding surface of the second portion and a portion of a bonding surface of the first portion of a respective one of the pair of first sealing portions.

The cutout portion may have any one of an arc shape or a straight-line shape parallel to a diagonal direction.

Each of the first sheet and the second sheet may include a polymer layer, and a melting point of the vent layer may be less than a melting point of the polymer layer.

The vent layer may be formed of a cast polypropylene layer with a coating layer stacked on an outer surface thereof.

A melting point of the coating layer may be 105°C to 115°C.

A bonding strength of the vent layer to at least one of the first sheet and/or the second sheet may be less than a bonding strength between the first sheet and the second sheet.

The vent layer may be formed of a cast polypropylene layer in which any one of a resin and a metal is mixed.

The bonding strength of the vent layer may be 0.5 kgf to 1.4 kgf.

A rechargeable battery according to another aspect includes:
an electrode assembly; and
a case comprising:
   a first sheet disposed at an upper side of the electrode assembly along a thickness direction;
   a second sheet disposed at a lower side of the electrode assembly along the thickness direction;
   an accommodating portion at least partially surrounding the electrode assembly;
   a sealing portion connected to an edge of the accommodating portion;
   a vent layer provided at the sealing portion; and
   a cutout portion,
   wherein the sealing portion includes a first portion facing a side surface of the accommodating portion by bending and a second portion extending outward from the first portion,
   wherein the cutout portion is disposed at a corner of the second portion, and
   wherein the vent layer is disposed on a bonding surface of the second portion and contacts a corner of the accommodating portion and the cutout portion.

The accommodating portion may be formed by the first and second sheets.

The sealing portion may be formed by the first and second sheets.

The cutout portion may have any one of an arc shape or a straight-line shape parallel to a diagonal direction. The cutout portion may be disposed continuously across the corner of the second portion and a portion of the first portion, and the vent layer may be disposed continuously across a bonding surface of the second portion and a portion of a bonding surface of the first portion to contact the entire cutout portion and a portion of the edge of the accommodating portion.

The vent layer may be formed of any one of a cast polypropylene layer with a coating layer stacked on an outer surface thereof or a cast polypropylene layer in which any one of a resin and/or a metal is mixed.

According to another aspect, there is provided a method of manufacturing a rechargeable battery according to the appended claims.

According to the embodiments, an overall size of the rechargeable battery may be reduced by bending of a sealing portion, and safety of the rechargeable battery may be improved using a cutout portion and a vent layer. Because the cutout portion shortens a moving distance of an internal gas passing through the vent layer from a corner of an accommodating portion, the cutout portion may facilitate gas discharging to enable rapid relief of an internal pressure.

At least some of the above and other features of the invention are set out in the claims.

### BRIEF DESCRIPTION OF THE DRAWINGS

FIG. 1 is a perspective view of a rechargeable battery according to a first embodiment.
FIG. 2 is a cross-sectional view of the rechargeable battery cut along a line II-II of FIG. 1.
FIG. 3 is a partially enlarged view of an electrode assembly of the rechargeable battery shown in FIG. 2.
FIG. 4 is a view showing a state before a first sealing portion of the rechargeable battery shown in FIG. 2 is bent.
FIG. 5 is a front view of a first sealing portion of the rechargeable battery shown in FIG. 1.
FIG. 6 is a partial plan view of the rechargeable battery showing a state before the first sealing portion of the rechargeable battery shown in FIG. 5 is bent.
FIG. 7 is a view of the first sealing portion of the rechargeable battery of FIG. 5 viewed from a direction A of FIG. 5.
FIG. 8A and FIG. 8B are partially enlarged views of the first sealing portion and a vent layer of the rechargeable battery shown in FIG. 7.
FIG. 9 is a front view of a first sealing portion of a rechargeable battery according to a second embodiment.
FIG. 10 is a partial plan view of the rechargeable battery of FIG. 9 showing a state before the first sealing portion of the rechargeable battery shown in FIG. 9 is bent.
FIG. 11 is a front view of a first sealing portion of a rechargeable battery according to a third embodiment.
FIG. 12 is a partial plan view of the rechargeable battery of FIG. 11 showing a state before the first sealing portion of the rechargeable battery shown in FIG. 11 is bent.
FIG. 13 is a front view of a first sealing portion of a rechargeable battery according to a fourth embodiment.
FIG. 14 is a partial plan view of the rechargeable battery of FIG. 13 showing a state before the first sealing portion of the rechargeable battery shown in FIG. 13 is bent.

### DETAILED DESCRIPTION OF THE DRAWINGS

Embodiments of the present disclosure will be described more fully hereinafter with reference to the accompanying drawings so that those skilled in the art can easily implement the embodiments. The present disclosure may be modified in various different ways, all without departing from the scope of the present disclosure.

An internal temperature and an internal pressure of a rechargeable battery may rapidly rise due to various causes such as fast charging, an internal short circuit, an external impact, exposure to a high-temperature environment, and the like. The rechargeable battery described herein has a vent function for discharging an internal gas under a preset temperature and pressure condition to prevent ignition and/or explosion due to the increase in the temperature and the pressure.

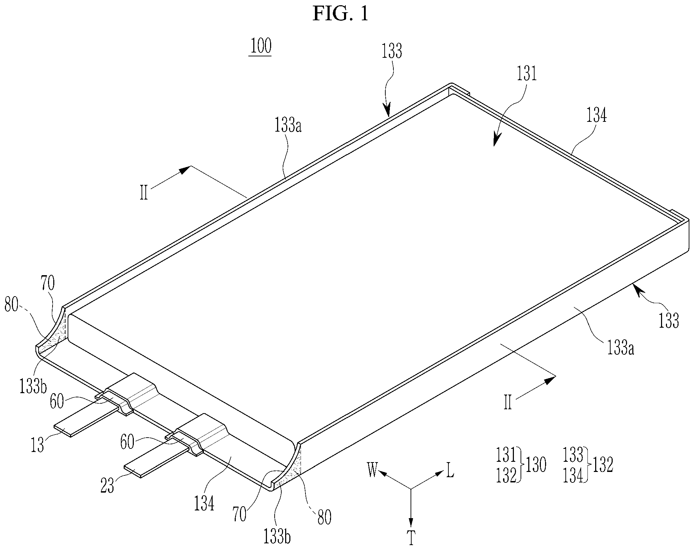

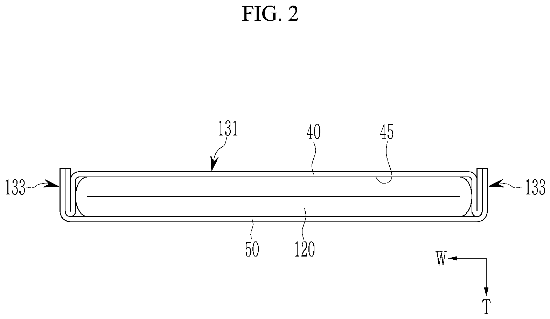

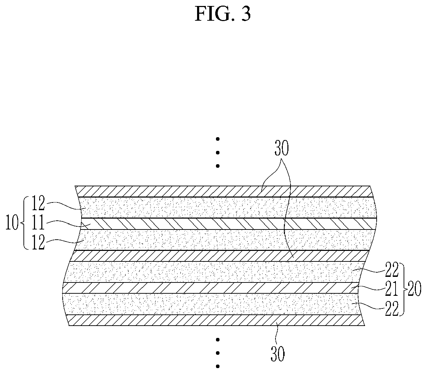

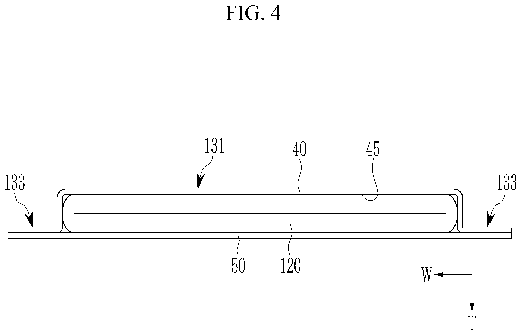

FIG. 1 is a perspective view of a rechargeable battery 100 according to a first embodiment, and FIG. 2 is a cross-sectional view of the rechargeable battery 100 cut along a line II-II of FIG. 1. FIG. 3 is a partially enlarged view of an electrode assembly 120 of the rechargeable battery 100 shown in FIG. 2, and FIG. 4 is a view showing a state before a first sealing portion of the rechargeable battery 100 shown in FIG. 2 is bent.

Referring to FIGS. 1 to 4, the rechargeable battery 100 according to the present embodiment may include the electrode assembly 120 and a case 130 accommodating and sealing the electrode assembly 120 together with an electrolyte. The case 130 may be referred to as a pouch, and may include a cutout portion 70 and a vent layer 80 that will be described later.

The electrode assembly 120 may include a first electrode 10 and a second electrode 20 disposed with a separator 30 interposed therebetween. The first electrode 10 may include a first substrate 11, first composite layer 12 disposed on both surfaces of the first substrate 11 (e.g., first and second first composite layers 12 disposed on both surfaces of the first substrate 11), and a first electrode tab 13 extending from the first substrate 11 to one side (e.g., along the length axis "L" shown in FIG. 1). The second electrode 20 may include a second substrate 21, second composite layer 22 disposed on both surfaces of the second substrate 21 (e.g., first and second second composite layers 22 disposed on respective surfaces of the second substrate 21), and a second electrode tab 23 extending from the second substrate 21 to one side (e.g., along the length axis "L" shown in FIG. 1).

In a lithium ion battery, the first substrate 11 may be formed of an aluminum foil, and the first composite layer 12 may include transition metal oxide such as LiCoO₂, LiNiO₂, LiMn₂O₄, Li(NiCoAl)O₂, LiFePO₄, Li(NiCoMn)O₂, or the like, a conductive material, a binder, or the like. The second substrate 21 may be formed of a copper foil or a nickel foil, and the second composite layer 22 may include graphite, a conductive material, a binder, or the like. The first electrode 10 may be referred to as a positive electrode, and second electrode 20 may be referred to as a negative electrode.

The separator 30 may include a polymer material such as polyethylene (PE), polypropylene (PP), or the like, and may insulate the first electrode 10 and the second electrode 20 while allowing movement of a lithium ion.

The electrode assembly 120 may be configured to be flat pressed after the first electrode 10, the separator 30, and the second electrode 20 are wound around two winding axes, and may be a wound type electrode assembly. The electrode assembly 120 may have a configuration in which a plurality of first electrodes 10 and a plurality of second electrodes 20 are alternately stacked one by one with the separator 30 interposed therebetween, and may be a stacked type electrode assembly. In the latter case, a plurality of separators individually separated may be used, or one separator folded in a zigzag pattern may be used. In FIG. 2, a case 130 where the electrode assembly 120 has the wound type is shown as an example.

The electrode assembly 120 may have a rectangular shape with a pair of long sides (e.g., running along a length axis "L") and a pair of short sides (e.g., running along a width axis "W") on a plane. Hereinafter, the phrase "on a plane" may mean when an object portion is viewed from above.

In the present embodiment, a direction parallel to the long side of the electrode assembly 120 may be referred to as a length direction L of the rechargeable battery 100, and a direction parallel to the short side of the electrode assembly 120 may be referred to as a width direction W of the rechargeable battery 100. A direction orthogonal to the length direction L and the width direction W may be referred to as a thickness direction T of the rechargeable battery 100. The first electrode tab 13 and the second electrode tab 23 may extend along the length direction L from one short side of the electrode assembly 120, and the first and second electrode tabs 13, 23 may be disposed at a distance from each other along the width direction W.

The case 130 may include a first sheet 40 and a second sheet 50 disposed at both sides (upper and lower sides) of the electrode assembly 120 along the thickness direction T. For example, the first sheet 40 may be disposed at an upper side of the electrode assembly 120 and the second sheet 50 may be disposed at a lower side of the electrode assembly 120. Each of the first sheet 40 and the second sheet 50 may be formed of a composite sheet, and may have a larger area than that of the electrode assembly 120. One of the first sheet 40 and the second sheet 50 (for example, the first sheet 40) may have a concave portion 45 capable of accommodating the electrode assembly 120 e.g. provided by a drawing processing.

The composite sheet may have a three-layer structure including a first polymer layer, a metal layer, and a second polymer layer. The metal layer may include aluminum, and may provide mechanical strength to the case 130. The first and/or second polymer layers may include any one of modified polypropylene (PP), polyethylene terephthalate (PET), nylon, and/or PET-nylon, and may provide insulation and protection functions to the case 130.

After the electrode assembly 120 is accommodated in the concave portion 45 of the first sheet 40, edges of the first sheet 40 and the second sheet 50 may be integrally bonded by heat staking (or thermal fusion). The case 130 may include an accommodating portion 131 accommodating the electrode assembly 120, and a sealing portion 132 connected to an edge of the accommodating portion 131. A central portion of the first and second sheets 40, 50 surrounding the electrode assembly 120 may form the accommodating portion 131, and edge portions of the first and second sheets 40, 50 integrally bonded by heat staking, for example, may form the sealing portion 132. For example, the sealing portion 132 may be formed of a bonded body of the first sheet 40 and the second sheet 50.

The sealing portion 132 may include a pair of first sealing portions 133 parallel to the length direction L, and a pair of second sealing portions 134 parallel to the width direction W. The first and second electrode tabs 13, 23 may pass through any one of the second sealing portions 134 to protrude to the outside of the case 130, and may function as electrode terminals supplying an electric current to an external device. The first and second electrode tabs 13, 23 may overlap the second sealing portion 134 at a portion surrounded by a protective tape 60.

The first sealing portion 133 may be bent to face a side surface of the accommodating portion 131 so as to reduce an overall size of the rechargeable battery 100. As shown in FIG. 4, an initial first sealing portion 133 may be disposed parallel to an upper surface and a lower surface of the electrode assembly 120. This may enlarge the overall size of the rechargeable battery 100. Because the overall size of the rechargeable battery 100 has to be reduced in order to reduce a size of an electronic device, the first sealing portion 133 may be bent to be disposed parallel to the side surface of the accommodating portion 131 (e.g., parallel to the thickness direction "T").

If the first sheet 40 with the concave portion 45 is provided, the first sealing portion 133, before the first sealing portion 133 is bent, may be disposed at substantially the same height as that of the second sheet 50. The first sealing portion 133 may be vertically bent upward (e.g. from the position shown in FIG. 4) to be disposed parallel to a side surface of the electrode assembly 120 (e.g. as shown in FIG. 2).

Like the first sealing portion 133, the second sealing portion 134 disposed opposite to the first and second electrode tabs 13, 23 may be vertically bent to face the side surface of the accommodating portion 131.

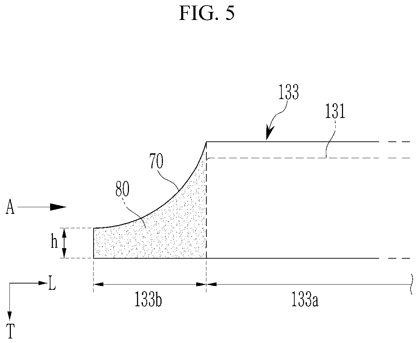

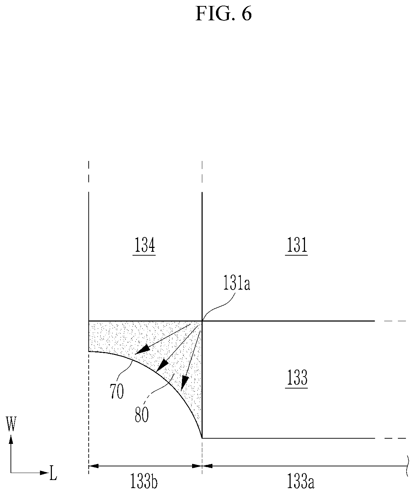

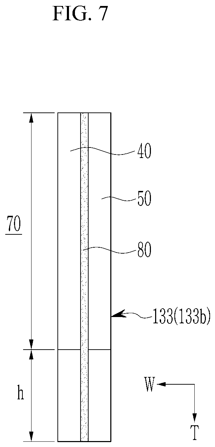

FIG. 5 is a front view of the first sealing portion 133 of the rechargeable battery 100 shown in FIG. 1, and FIG. 6 is a partial plan view of the rechargeable battery 100 of FIG. 5 showing a state before the first sealing portion 133 of the rechargeable battery 100 shown in FIG. 5 is bent. FIG. 7 is a view of the first sealing portion 133 of the rechargeable battery 100 of FIG. 5 viewed from a direction A of FIG. 5.

Referring to FIGS. 5 to 7, a length of the first sealing portion 133 along the length direction L may be greater than a length of the accommodating portion 131. One end portion (a left end portion as shown in FIG. 5) of the first sealing portion 133 may be disposed at a predetermined distance from the accommodating portion 131 along the length direction L. The first sealing portion 133 may include a first portion 133a that faces the accommodating portion 131 along the width direction W and a second portion 133b that does not face the accommodating portion 131 along the width direction W (e.g., as the second portion 133b extends past the accommodating portion 131 along the length direction L). The second portion 133b may be referred to as an extension portion.

The cutout portion 70 may be disposed at the second portion 133b. In a typical rechargeable battery, generally, a first sealing portion may have a rectangular shape and a corner of the second portion may be folded inward. However, in the rechargeable battery 100 of the present embodiment, the corner of the second portion 133b may be cut by mechanical cutting, laser cutting, or the like, and the cutout portion 70 may be disposed along the cut portion.

The cutout portion 70 may be formed in an arc shape with a predetermined curvature. The cutout portion 70 may have a convex curve toward a lower end of the first sealing portion 133 as shown in FIG. 5. The cutout portion 70 with the arc shape may prevent an end portion of the first sealing portion 133 from protruding as if a corner of the second portion 133b is folded inward, so that when a protection circuit such as a protection circuit module (PCM) or the like is coupled on the case 130, the case 130 and the protection circuit are easily coupled.

The cutout portion 70 may be disposed at a predetermined distance from a lower end of the bent first sealing portion 133 along the thickness direction T. For example, one end portion of the cutout portion 70 that is close to the accommodating portion 131 may be in contact with an upper end of the first sealing portion 133, and the other end of the cutout portion 70 that is far from the accommodating portion 131 may have a height h from a lower end of the first sealing portion 133.

The vent layer 80 may be disposed on a bonding surface of the second portion 133b so as to contact the cutout portion 70 and a corner of the accommodating portion 131. The bonding surface of the second portion 133b may be a bonding surface between the first sheet 40 and the second sheet 50, and the vent layer 80 may be disposed between the first sheet 40 and the second sheet 50 at the second portion 133b.

When the first sheet 40 and the second sheet 50 are manufactured, the vent layer 80 may be provided on at least one of an inner surface of the first sheet 40 and an inner surface of the second sheet 50 corresponding to the second portion 133b considering a position of the cutout portion 70. The vent layer 80 may be bonded to at least one of the inner surfaces of the first and second sheets 40 and 50 by various methods such as adhesion by an adhesive, heat staking, welding, and the like. The vent layer 80 may be disposed on an entire bonding surface of the second portion 133b.

The vent layer 80 may have a bonding degree lower than a bonding degree between the first sheet 40 and the second sheet 50 by heat staking, or may have a melting point lower than a melting point of a polymer layer included in the first and second sheets 40, 50. The vent layer 80 may simultaneously have the bonding degree lower than the bonding degree between the first sheet 40 and the second sheet 50 and the melting point lower than the melting point of the polymer layer included in the first and second sheets 40, 50.

For example, the bonding degree of the vent layer 80 may mean the bonding degree of the vent layer 80 with the first sheet 40 or the second sheet 50, or a bonding degree between two vent layers when the vent layer 80 is disposed on each of the inner surface of the first sheet 40 and the inner surface of the second sheet 50 to be bonded to each other. The bonding degree may have the same meaning as that of a bonding strength. The vent layer 80 may include any one of a polymer resin layer and a polymer resin-metal mixed layer satisfying the above-described condition.

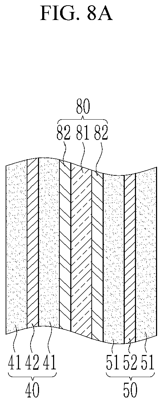

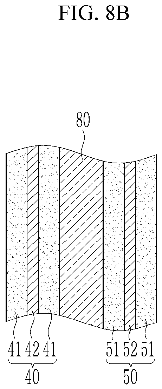

FIG. 8A and FIG. 8B are partially enlarged views of the first sealing portion and the vent layer shown in FIG. 7.

Referring to FIG. 8A, the vent layer 80 may include a cast polypropylene (CPP) layer 81 and a coating layer 82 disposed on an outer surface of the cast polypropylene layer 81 (e.g., first and second coating layers 82 disposed on respective surfaces of the cast polypropylene (CPP) layer 81). The coating layer 82 may be a resin layer including polyethylene (PE) or the like, or a metal layer including aluminum (Al), copper (Cu), or the like. A melting point of the coating layer 82 may be about 100°C to 120°C, and as another example, may be about 105°C to 115°C. The temperature range may be lower than melting points of polymer layers 41, 51 of the first and second sheets 40, 50 that are about 140°C to 165°C.

Referring to FIG. 8B, the vent layer 80 may be formed of a cast polypropylene (CPP) layer in which a resin such as polyethylene (PE) or the like is mixed or a metal such as aluminum (Al), copper (Cu), or the like is mixed. The first and second sheets 40, 50 may be bonded at a temperature condition of about 180°C to 230°C and a time condition of 1 second to 5 seconds, and in this case, a bonding strength between the first sheet 40 and the second sheet 50 may be about 1.5 kgf or more. A bonding strength of the vent layer 80 may be about 0.5 kgf to 1.4 kgf. The bonding strength range may be lower than the bonding strength between the first sheet 40 and the second sheet 50.

For reference, in FIG. 8A and FIG. 8B, a reference numeral 42 may represent a metal layer included in the first sheet 40, and a reference numeral 52 may represent a metal layer included in the second sheet 50.

In general, an internal temperature of a rechargeable battery may rise due to various causes such as overcharging, an internal short circuit, an external impact, exposure to a high-temperature environment, and the like. In this case, a gas may be generated due to vaporization of an electrolyte or the like. The gas generation may lead to an increase in an internal pressure of the rechargeable battery, and may cause ignition and/or explosion of the rechargeable battery.

Referring back to FIGS. 5 to 7, the vent layer 80 may be melted under a specific temperature condition to open the bonding surface, or may release the bonding under the specific pressure condition to open the bonding surface.

For example, a surface of the vent layer 80 (for example, the coating layer 82 of FIG. 8A) may be melted at a specific temperature or higher, so that a gap between the first and second sheets 40, 50 and the vent layer 80 occurs. In some embodiments, if a pressure applied to the vent layer 80 becomes greater than the bonding degree of the vent layer 80, the vent layer 80 may be torn from the first and second sheets 40, 50, or the vent layer 80 may be destroyed so that a gap is generated between the first and second sheets 40, 50 and the vent layer 80 or inside the vent layer 80.

An internal gas of the rechargeable battery 100 may reach the cutout portion 70 from a corner 131a of the accommodating portion 131 through a gap formed around the vent layer 80 or inside the vent layer 80, and may be quickly discharged to the outside through the opened cutout portion 70. In FIG. 6, a moving direction of the internal gas crossing the vent layer 80 is indicated by the arrows. The vent layer 80 may relieve the internal pressure by opening the bonding surface when the internal pressure of the rechargeable battery 100 increases.

The rechargeable battery 100 of the present embodiment may reduce an overall size by bending the first sealing portion 133, and it may simultaneously improve safety by including the vent layer 80 at the second portion 133b of the first sealing portion 133. For example, the cutout portion 70 may shorten a moving distance of the internal gas passing through the vent layer 80 from the corner 131a of the accommodating portion 131, so that the cutout portion 70 facilitates rapid gas discharging to enable rapid relief of the internal pressure.

If there is no cutout portion 70 in the second portion 133b and the vent layer 80 is disposed on an entire bonding surface of the second portion 133b, the internal gas may be discharged to the outside only by moving along a path corresponding to a width of the first sealing portion 133 from the corner 131a of the accommodating portion 131 or moving along a diagonal direction path from the corner 131a of the accommodating portion 131 to the corner of the second portion 133b. The configuration may hinder rapid discharging of the internal gas.

In the present embodiment, a distance between the corner 131a of the accommodating portion 131 and an edge of the vent layer 80 may be shortened by the cutout portion 70, so that the cutout portion 70 enables rapid discharging of the gas. For example, the rechargeable battery 100 of the present embodiment may quickly relieve the internal pressure in an abnormal situation where the internal temperature and the internal pressure rapidly rise, and may effectively prevent ignition and/or explosion of the rechargeable battery.

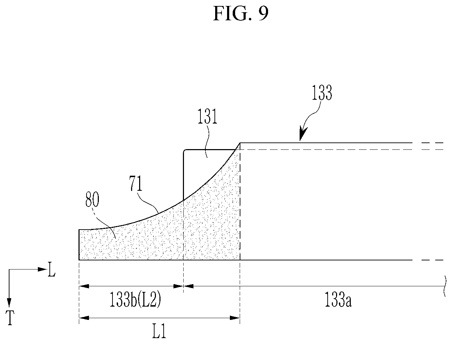

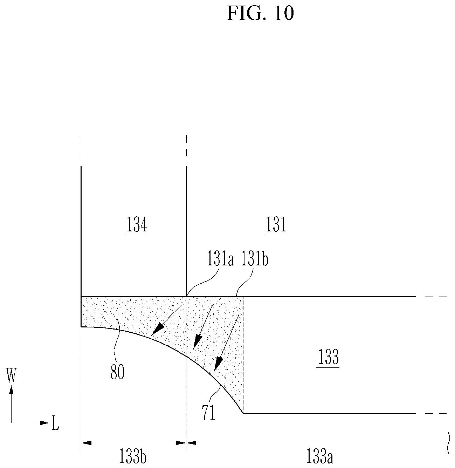

FIG. 9 is a front view of a first sealing portion of a rechargeable battery according to a second embodiment, and FIG. 10 is a partial plan view of the rechargeable battery showing a state before the first sealing portion of the rechargeable battery shown in FIG. 9 is bent. The rechargeable battery of the second embodiment may have the same or similar configuration as that of the first embodiment described above except for the contents described below.

Referring to FIG. 9 and FIG. 10, in the second embodiment, a cutout portion 71 may be disposed across the first portion 133a and the second portion 133b of the first sealing portion 133, and the vent layer 80 may be disposed across an entire bonding surface of the second portion 133b and a portion of the bonding surface of the first portion 133a so as to contact the corner 131a of the accommodating portion 131 and the cutout portion 71. A length L1 of the cutout portion 71 along the length direction L of the rechargeable battery may be greater than a length L2 of the second portion 133b, and a portion of the vent layer 80 may face a side surface of the accommodating portion 131 along the width direction W of the rechargeable battery.

In the second embodiment, the vent layer 80 may contact not only the corner 131a of the accommodating portion 131 but also a portion of an edge 131b of the accommodating portion 131 parallel to the length direction L. In the structure, when the temperature and the pressure of the rechargeable battery are increased, the vent layer 80 may be quickly melted or damaged to quickly open the bonding surface. Thus, the internal pressure may be relieved more quickly.

In the second embodiment, compared with the first embodiment, a length of the vent layer 80 in contact with the accommodating portion 131 may be extended, and a movement path of the internal gas crossing the vent layer 80 from the accommodating portion 131 may be shortened. In FIG. 10, a direction of movement of the internal gas crossing the vent layer 80 is indicated by arrows. In the second embodiment, when the temperature and the pressure of the rechargeable battery are increased, opening of the bonding surface of the vent layer 80 and gas discharging due to the opening may be performed more smoothly and/or efficiently.

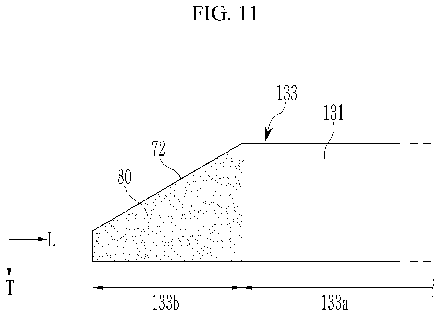

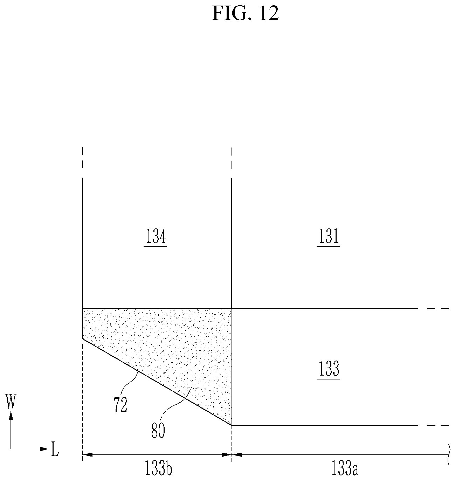

FIG. 11 is a front view of a first sealing portion of a rechargeable battery according to a third embodiment, and FIG. 12 is a partial plan view of the rechargeable battery of FIG. 11 showing a state before the first sealing portion of the rechargeable battery shown in FIG. 11 is bent. The rechargeable battery of the third embodiment may have the same or similar configuration as that of the first embodiment described above except for the contents described below.

Referring to FIG. 11 and FIG. 12, in the third embodiment, a cutout portion 72 may have a straight-line shape, and the vent layer 80 may be provided on the bonding surface of the second portion 133b to contact the corner 131a of the accommodating portion 131 and the cutout portion 72. The corner of the second portion 133b may be cut into a straight line along a diagonal direction, and the cutout portion 72 with the straight-line shape may be disposed along the cut portion. For example, the diagonal direction may be a direction inclined with respect to a lower end and left and right side surfaces of the second portion 133b based on FIG. 10.

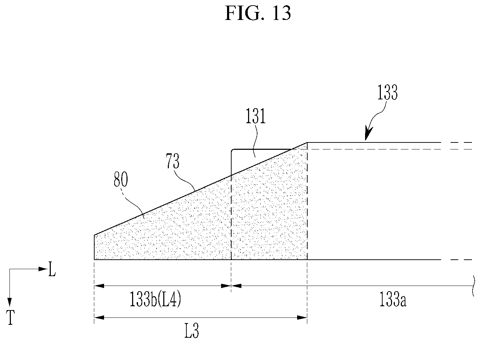

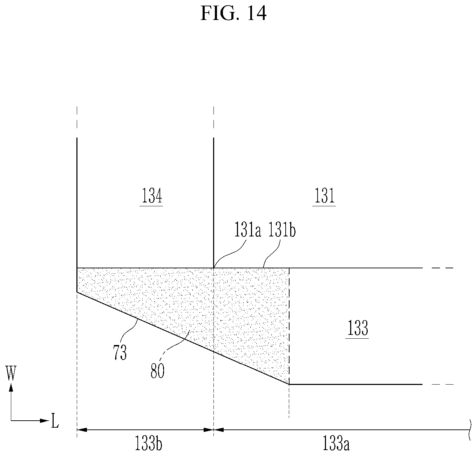

FIG. 13 is a front view of a first sealing portion of a rechargeable battery according to a fourth embodiment, and FIG. 14 is a partial plan view of the rechargeable battery of FIG. 13 showing a state before the first sealing portion of the rechargeable battery shown in FIG. 13 is bent. The rechargeable battery of the fourth embodiment may have the same or similar configuration as that of the third embodiment described above except for the contents described below.

Referring to FIG. 13 and FIG. 14, in the fourth embodiment, a cutout portion 73 may be disposed across the first portion 133a and the second portion 133b of the first sealing portion 133, and the vent layer 80 may be disposed across an entire bonding surface of the second portion 133b and a portion of the bonding surface of the first portion 133a so as to contact the corner 131a of the accommodating portion 131 and the cutout portion 73. A length L3 of the cutout portion 73 along the length direction L of the rechargeable battery may be greater than a length L4 of the second portion 133b, and a portion of the vent layer 80 may face a side surface of the accommodating portion 131 along the width direction W of the rechargeable battery.

In the fourth embodiment, the vent layer 80 may contact not only the corner 131a of the accommodating portion 131 but also a portion of an edge 131b of the accommodating portion 131 parallel to the length direction L. In the fourth embodiment, compared with the third embodiment, a length of the vent layer 80 in contact with the accommodating portion 131 may be extended, and a movement path of the internal gas crossing the vent layer 80 from the accommodating portion 131 may be shortened. Thus, when the temperature and the internal pressure of the rechargeable battery are increased, opening of the bonding surface of the vent layer 80 and gas discharging due to the opening may be performed more smoothly and/or efficiently.

Embodiments are set out in the following clauses.

Clause 1. A rechargeable battery comprising: an electrode assembly; a case that includes an accommodating portion surrounding the electrode assembly and a sealing portion connected to an edge of the accommodating portion and includes a first sheet and a second sheet disposed at an upper side and a lower side of the electrode assembly along a thickness direction; and a vent layer that is provided at the sealing portion, wherein the sealing portion is bent to face a side surface of the accommodating portion, a cutout portion is disposed at one end portion of the sealing portion, and the vent layer is disposed on a bonding surface between the first sheet and the second sheet while contacting a corner of the accommodating portion and the cutout portion.

Clause 2. The rechargeable battery of clause 1, wherein the sealing portion includes a pair of first sealing portions disposed at both sides of the accommodating portion, and each of the pair of first sealing portions includes a first portion facing the side surface of the accommodating portion and a second portion extending outward from the first portion.

Clause 3. The rechargeable battery of clause 2, wherein the cutout portion is disposed at a corner of the second portion, and the vent layer is provided on an entire bonding surface of the second portion.

Clause 4. The rechargeable battery of clause 3, wherein the cutout portion has any one of an arc shape and a straight-line shape parallel to a diagonal direction.

Clause 5. The rechargeable battery of clause 2, wherein the cutout portion is disposed continuously across a corner of the second portion and a portion of the first portion, and the vent layer is disposed continuously across an entire bonding surface of the second portion and a portion of a bonding surface of the first portion.

Clause 6. The rechargeable battery of clause 5, wherein the cutout portion has any one of an arc shape and a straight-line shape parallel to a diagonal direction.

Clause 7. The rechargeable battery of clause 1, wherein each of the first sheet and the second sheet includes a polymer layer, and a melting point of the vent layer is less than a melting point of the polymer layer.

Clause 8. The rechargeable battery of clause 7, wherein the vent layer is formed of a cast polypropylene layer with a coating layer stacked on an outer surface thereof.

Clause 9. The rechargeable battery of clause 8, wherein a melting point of the coating layer is 105°C to 115°C.

Clause 10. The rechargeable battery of clause 1, wherein a bonding strength of the vent layer for at least one of the first sheet and the second sheet is less than a bonding strength between the first sheet and the second sheet.

Clause 11. The rechargeable battery of clause 10, wherein the vent layer is formed of a cast polypropylene layer in which any one of a resin and a metal is mixed.

Clause 12. The rechargeable battery of clause 11, wherein the bonding strength of the vent layer is 0.5 kgf to 1.4 kgf.

Clause 13. A rechargeable battery comprising: an electrode assembly; a case that includes an accommodating portion surrounding the electrode assembly and a sealing portion connected to an edge of the accommodating portion and includes a first sheet and a second sheet disposed at an upper side and a lower side of the electrode assembly along a thickness direction; and a vent layer that is provided at the sealing portion, wherein the sealing portion includes a first portion facing a side surface of the accommodating portion by bending and a second portion extending outward from the first portion, a cutout portion is disposed at a corner of the second portion, and the vent layer is disposed on a bonding surface of the second portion to contact a corner of the accommodating portion and the cutout portion.

Clause 14. The rechargeable battery of clause 13, wherein the cutout portion has any one of an arc shape and a straight-line shape parallel to a diagonal direction.

Clause 15. The rechargeable battery of clause 13, wherein the cutout portion is disposed continuously across the corner of the second portion and a portion of the first portion, and the vent layer is disposed continuously across a bonding surface of the second portion and a portion of a bonding surface of the first portion to contact the entire cutout portion and a portion of the edge of the accommodating portion.

Clause 16. The rechargeable battery of clause 13, wherein the vent layer is formed of any one of a cast polypropylene layer with a coating layer stacked on an outer surface thereof and a cast polypropylene layer in which any one of a resin and a metal is mixed.

While this disclosure has been described in connection with what is presently considered to be practical embodiments, it is to be understood that the disclosure is not limited to the disclosed embodiments. On the contrary, it is intended to cover various modifications and equivalent arrangements included within the scope of the appended claims.

## Claims

1. A rechargeable battery comprising:
an electrode assembly; and
a case comprising:
a first sheet disposed at an upper side of the electrode assembly along a thickness direction;
a second sheet disposed at a lower side of the electrode assembly along the thickness direction;
an accommodating portion at least partially surrounding the electrode assembly;
a sealing portion connected to an edge of the accommodating portion;
a vent layer provided at the sealing portion; and
a cutout portion,
wherein the sealing portion is bent to face a side surface of the accommodating portion,
wherein the cutout portion is disposed at one end portion of the sealing portion, and
wherein the vent layer is disposed on a bonding surface between the first sheet and the second sheet and contacts a corner of the accommodating portion and the cutout portion.

2. The rechargeable battery of claim 1, wherein:
the sealing portion includes a pair of first sealing portions, each respective one of the pair of first sealing portions being disposed on a respective side of the accommodating portion; and
each of the pair of first sealing portions includes a first portion facing the side surface of the accommodating portion and a second portion extending outward from the first portion.

3. The rechargeable battery of claim 2, wherein:
the cutout portion is disposed at a corner of the second portion of a respective one of the pair of first sealing portions; and
the vent layer is provided on an entire bonding surface of the second portion of a respective one of the pair of first sealing portions.

4. The rechargeable battery of claim 3, wherein:
the cutout portion has any one of an arc shape or a straight-line shape parallel to a diagonal direction.

5. The rechargeable battery of claim 2, wherein:
the cutout portion is disposed continuously across a corner of the second portion and a portion of the first portion of a respective one of the pair of first sealing portions; and
the vent layer is disposed continuously across an entire bonding surface of the second portion and a portion of a bonding surface of the first portion of a respective one of the pair of first sealing portions.

6. The rechargeable battery of claim 5, wherein:
the cutout portion has any one of an arc shape or a straight-line shape parallel to a diagonal direction.

7. The rechargeable battery of any preceding claim, wherein:
each of the first sheet and the second sheet includes a polymer layer; and
a melting point of the vent layer is less than a melting point of the polymer layer.

8. The rechargeable battery of claim 7, wherein:
the vent layer is formed of a cast polypropylene layer with a coating layer stacked on an outer surface thereof,
and wherein optionally:
a melting point of the coating layer is 105°C to 115°C.

9. The rechargeable battery of any preceding claim, wherein:
a bonding strength of the vent layer to at least one of the first sheet and/or the second sheet is less than a bonding strength between the first sheet and the second sheet,
and wherein optionally the bonding strength of the vent layer is 0.5 kgf to 1.4 kgf.

10. The rechargeable battery of any preceding claim, wherein:
the vent layer is formed of a cast polypropylene layer in which any one of a resin and/or a metal is mixed.

11. A rechargeable battery comprising:
an electrode assembly; and
a case comprising:
a first sheet disposed at an upper side of the electrode assembly along a thickness direction;
a second sheet disposed at a lower side of the electrode assembly along the thickness direction;
an accommodating portion at least partially surrounding the electrode assembly;
a sealing portion connected to an edge of the accommodating portion;
a vent layer provided at the sealing portion; and
a cutout portion,
wherein the sealing portion includes a first portion facing a side surface of the accommodating portion by bending and a second portion extending outward from the first portion,
wherein the cutout portion is disposed at a corner of the second portion, and
wherein the vent layer is disposed on a bonding surface of the second portion and contacts a corner of the accommodating portion and the cutout portion.

12. The rechargeable battery of claim 11, wherein:
the cutout portion has any one of an arc shape or a straight-line shape parallel to a diagonal direction.

13. The rechargeable battery of claim 11 or 12, wherein:
the cutout portion is disposed continuously across the corner of the second portion and a portion of the first portion; and
the vent layer is disposed continuously across a bonding surface of the second portion and a portion of a bonding surface of the first portion to contact the entire cutout portion and a portion of the edge of the accommodating portion.

14. The rechargeable battery of claim 11, 12 or 13, wherein:
the vent layer is formed of any one of a cast polypropylene layer with a coating layer stacked on an outer surface thereof or a cast polypropylene layer in which any one of a resin and/or a metal is mixed.

15. A method of manufacturing a rechargeable battery comprising:
forming a case for an electrode assembly,
wherein the case comprises the case according to any one of claims 1 to 10 or the case according to any one of claims 11 to 14; and
disposing the electrode assembly inside the case.
